# FASCICULE DE BREVET EUROPEEN

(11) **EP 4 013 096 B1**
(45) Date de publication et mention de la délivrance du brevet: **07.12.2022**
(21) Numéro de dépôt: 21213771.5
(22) Date de dépôt: 10.12.2021
(51) Int. Cl.: H04W 12/55, H04W 12/61, H04L 69/28, H04W 76/10, H04W 84/12

(54) **APPAIRAGE MULTIPLE**
MEHRFACH-PAIRING
MULTIPLE PAIRING

(30) Priorité: 14.12.2020 FR 2013133
(43) Date de publication de la demande: 15.06.2022
(73) Titulaire: SAGEMCOM BROADBAND SAS, 92500 Rueil-Malmaison (FR)
(72) Inventeur: LE ROUX, Sylvain, 92500 RUEIL MALMAISON (FR)
(74) Mandataire: Cabinet Le Guen Maillet

(56) Documents cités:
- US-A1- 2018 054 845
- US-A1- 2019 008 024

## Description

### DOMAINE TECHNIQUE

La présente invention concerne un appairage de plusieurs stations, en une seule session d'appairage, avec un point d'accès sans-fil d'un réseau local sans-fil. La présente invention est particulièrement adaptée aux réseaux Wi-Fi.

### ETAT DE LA TECHNIQUE ANTERIEURE

La mise en place de réseaux locaux sans-fil WLAN (« Wireless Local Area Network » en anglais) offre une grande flexibilité aux utilisateurs de dispositifs de communication, appelés « stations », tels que des ordinateurs, des tablettes, des téléphones intelligents, des dispositifs décodeurs STB (« Set-Top Box » en anglais), etc.

De tels réseaux WLAN sont établis par des points d'accès sans-fil WAP (« Wireless Access Point » en anglais), qui sont par exemple intégrés à des passerelles résidentielles RGW (« Residential GateWay » en anglais) mises à disposition par des fournisseurs d'accès Internet à des utilisateurs leur ayant souscrit un abonnement. Des points d'accès sans-fil WAP complémentaires intégrés à des extendeurs (« extenders » en anglais) peuvent être utilisés pour étendre la couverture radio de ces réseaux locaux sans-fil WLAN.

Afin de ne pas autoriser toute station à se connecter à un réseau WLAN et à avoir accès aux échanges de données intervenant via le réseau WLAN, des protocoles de sécurité sont implémentés. Assurer la sécurité du réseau WLAN ne doit cependant pas se faire au détriment d'une simplicité de configuration.

Par exemple, dans le cadre d'un réseau Wi-Fi, le protocole WPS (« Wi-Fi Protected Setup » en anglais) peut être implémenté. Le but du protocole WPS est de proposer une phase de configuration pour sécuriser un réseau Wi-Fi qui soit simple, et notamment accessible à des utilisateurs sans connaissances particulières en configuration de réseaux de communication.

Le protocole WPS propose au moins trois manières de permettre à une station de s'appairer avec un point d'accès sans-fil WAP, c'est-à-dire de récupérer auprès dudit point d'accès sans-fil WAP des clés de chiffrement permettant de communiquer de manière sécurisée au sein du réseau Wi-Fi : la procédure d'appairage PIN (« Personal Identification Number » en anglais), la procédure d'appairage PBC (« Push-Button Configuration » en anglais) et la procédure d'appairage NFC (« Near Field Communication » en anglais).

La procédure d'appairage PBC repose sur le fait que l'utilisateur appuie sur un bouton, qu'il soit physique ou virtuel (i.e., sur une interface graphique), à la fois sur le point d'accès sans-fil WAP et sur la station à connecter au réseau Wi-Fi sécurisé. Le point d'accès sans-fil WAP fournit ainsi, pendant un laps de temps de durée prédéfinie et à toute station en faisant la requête, une autorisation systématique d'appairage.

Cela signifie qu'une seule station peut être appairée de cette manière à la fois. La procédure d'appairage PBC doit donc être répétée autant de fois qu'il y a de stations à appairer.

Bien que simple, cette procédure d'appairage PBC peut s'avérer fastidieuse lorsque plusieurs stations doivent être appairées à un même point d'accès sans-fil WAP. Cette situation survient par exemple lorsque, dans une installation, le point d'accès sans-fil WAP est remplacé (e.g., remplacement de passerelle résidentielle ou d'extendeur). Dans ce cas en effet, toutes les stations qui étaient précédemment appairées avec le précédent point d'accès sans-fil WAP doivent alors être appairées avec le nouveau point d'accès sans-fil WAP.

Le standard DPP (pour « Device Provisioning Protocol » en anglais), qui vise à remplacer le protocole WPS, fournit d'autres méthodes pour appairer des stations à un point d'accès sans-fil WAP (comme par exemple, par l'usage d'un code-barre à deux dimensions, dit *QRCode*)*.* Néanmoins, la même limitation demeure : il est nécessaire de répéter la procédure d'appairage autant de fois qu'il y a de stations à appairer.

Les demandes de brevet US 2019/008024 et US 2018/054845 décrivent un mécanisme d'appairage pour appairer plusieurs stations avec un point d'accès sans-fil d'un réseau local sans-fil.

Il est donc souhaitable de pallier ces inconvénients de l'état de la technique.

Il est notamment souhaitable de fournir une solution qui permette d'accélérer l'appairage de plusieurs stations.

Il est notamment souhaitable de fournir une solution qui reste accessible à des utilisateurs sans connaissances particulières en configuration de réseaux de communication et qui soit encore plus simple à opérer en présence de plusieurs stations à appairer.

### EXPOSE DE L'INVENTION

Il est proposé un procédé d'appairage multiple pour appairer plusieurs stations avec un point d'accès sans-fil d'un réseau local sans-fil, le point d'accès sans-fil diffusant des trames de balise relatives au réseau local sans-fil, le procédé étant implémenté par le point d'accès sans-fil et comportant les étapes suivantes : inclure, dans les trames de balise diffusées, une notification de déclenchement d'appairage multiple incluant un identifiant de session d'appairage multiple, pendant une période de déclaration de durée maximum prédéfinie ; recevoir des demandes de participation à l'appairage multiple en provenance desdites stations, lesdites demandes incluant l'identifiant de session d'appairage multiple, et créer à partir des demandes reçues une liste de stations à appairer ; et à l'expiration de la période de déclaration, effectuer des appairages individuels à tour de rôle avec chacune des stations de la liste. Ainsi, l'appairage de plusieurs stations est accéléré en laissant la possibilité aux stations qui ne sont pas appairées de toutes participer à l'appairage multiple.

Selon un mode de réalisation particulier, le procédé comporte : fournir pour affichage sur une interface graphique la liste des stations desquelles lesdites demandes ont été reçues ; recevoir une confirmation de la liste des stations à appairer, ou une sélection de stations à appairer parmi la liste fournie ; et effectuer les appairages individuels à tour de rôle, et pour seulement les stations sélectionnées le cas échéant. Ainsi, seules les stations réellement souhaitées par l'utilisateur bénéficient de l'appairage multiple.

Selon un mode de réalisation particulier, lesdites demandes incluent chacune un nom d'hôte de la station ayant transmis la demande en question, et la liste des stations qui est fournie pour affichage sur l'interface graphique est une liste desdits noms d'hôtes. Ainsi, le contrôle par l'utilisateur est simplifié.

Selon un mode de réalisation particulier, la liste des stations pour affichage sur l'interface graphique est fournie au fur et à mesure des réceptions des demandes de participation à l'appairage multiple, et le procédé comporte : recevoir la confirmation de la liste des stations à appairer, ou la sélection de stations à appairer parmi la liste fournie, avant que la durée maximum prédéfinie de la période de déclaration ne soit expirée, et mettre fin à la période de déclaration de manière anticipée. Ainsi, l'appairage multiple peut être accéléré dès que l'utilisateur obtient la liste de toutes les stations souhaitées.

Selon un mode de réalisation particulier, l'interface graphique est fournie par une station préalablement appairée avec le point d'accès sans-fil. Ainsi, il n'est pas nécessaire que le point d'accès sans-fil soit lui-même équipé d'un écran.

Selon un mode de réalisation particulier, les trames de balise ont un format défini par la famille de standards IEEE 802.11, et la notification de déclenchement d'appairage multiple a la forme d'une structure de type « Information Element » IE dédiée. Ainsi, une implémentation dans les réseaux Wi-Fi est aisée.

Selon un mode de réalisation particulier, le procédé comporte : initier chaque appairage individuel en incluant dans les trames de balise, pour chaque station à appairer à son tour, une notification de déclenchement d'appairage individuel incluant l'adresse MAC de la station en question, l'adresse MAC ayant été obtenue grâce à la réception de la demande de participation à l'appairage multiple en provenance de la station en question.

Selon un mode de réalisation particulier, les trames de balise ont un format défini par la famille de standards IEEE 802.11, et la notification de déclenchement d'appairage individuel a la forme d'une structure de type « Information Element » IE dédiée. Ainsi, une implémentation dans les réseaux Wi-Fi est aisée.

Selon un mode de réalisation particulier, le point d'accès sans-fil et les stations échangent des messages selon un format défini par la famille de standards IEEE 802.11, et comportant :
- initier chaque appairage individuel en envoyant à chaque station à appairer, à son tour, une trame de type « Action Frame » dédiée. Ainsi, une implémentation dans les réseaux Wi-Fi est aisée.

Selon un mode de réalisation particulier, le point d'accès sans-fil et les stations échangent des messages selon un format défini par la famille de standards IEEE 802.11, et dans lequel les demandes de participation à l'appairage multiple ont la forme de trames diffusées de type « Probe Request » incluant une structure de type « Information Element » IE dédiée. Ainsi, une implémentation dans les réseaux Wi-Fi est aisée.

Selon un mode de réalisation particulier, le point d'accès sans-fil et les stations échangent des messages selon un format défini par la famille de standards IEEE 802.11, et dans lequel les demandes de participation à l'appairage multiple ont la forme de trames de type « Action Frame » dédiées. Ainsi, une implémentation dans les réseaux Wi-Fi est aisée.

Selon un mode de réalisation particulier, le procédé comporte, avant l'expiration de la période de déclaration : sur réception d'une demande de participation à un autre appairage multiple identifié par une autre identifiant de session d'appairage multiple, mettre fin à l'appairage multiple. Ainsi, des appairages non souhaités peuvent être évités.

Selon un mode de réalisation particulier, les stations qui envoient les demandes de participation à l'appairage multiple sont des stations qui ne sont appairées à aucun point d'accès sans-fil au moment de recevoir la notification de déclenchement d'appairage multiple. Ainsi, le remplacement de points d'accès sans-fil est facilité.

Selon un mode de réalisation particulier, lorsqu'une station détecte plus d'une session d'appairage multiple dans un intervalle de temps prédéfini, la station en question ignore toute proposition d'appairage multiple et ignore également toute proposition d'appairage individuel pendant une durée prédéfinie. Ainsi, des appairages non souhaités peuvent être évités.

Il est également proposé un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de ses modes de réalisation, lorsque ledit programme est exécuté par le processeur. Il est également proposé un support de stockage d'informations stockant un tel programme d'ordinateur.

Il est également proposé un point d'accès sans-fil configuré pour effectuer un appairage multiple permettant d'appairer plusieurs stations avec un point d'accès sans-fil d'un réseau local sans-fil, le point d'accès sans-fil diffusant des trames de balise relatives au réseau local sans-fil, le point d'accès sans-fil comportant : des moyens pour inclure, dans les trames de balise diffusées, une notification de déclenchement d'appairage multiple incluant un identifiant de session d'appairage multiple, pendant une période de déclaration de durée maximum prédéfinie ; des moyens pour recevoir des demandes de participation à l'appairage multiple en provenance desdites stations, lesdites demandes incluant l'identifiant de session d'appairage multiple, et des moyens pour créer à partir des demandes reçues une liste de stations à appairer ; et des moyens pour, à l'expiration de la période de déclaration, effectuer des appairages individuels à tour de rôle avec chacune des stations de la liste.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1A] illustre schématiquement un premier exemple d'un système de communication ;
[Fig. 1B] illustre schématiquement un deuxième exemple de système de communication ;
[Fig. 2] illustre schématiquement un exemple d'architecture matérielle incluse dans un point d'accès sans-fil ou dans une station du système de communication ;
[Fig. 3] illustre schématiquement un algorithme général d'appairage multiple ;
[Fig. 4] illustre schématiquement un algorithme d'initiation d'appairage multiple, dans un mode de réalisation particulier ;
[Fig. 5] illustre schématiquement une interface graphique adaptée à sélectionner et confirmer des stations à traiter en appairage multiple ; et
[Fig. 6] illustre schématiquement un algorithme d'exécutions successives de procédures d'appairages individuels dans une même session d'appairage.

### EXPOSE DETAILLE DE MODES DE REALISATION

Le cadre de la divulgation suivante est celui d'un réseau local sans-fil WLAN 120 géré par un point d'accès sans-fil WAP 150 et dans lequel des stations STA 111, 112, 113 doivent être appairées avec le point d'accès sans-fil WAP 150 pour pouvoir bénéficier de services de communication offerts par le réseau local sans-fil WLAN 120. Le réseau local sans-fil WLAN 120 est préférentiellement un réseau Wi-Fi aménagé pour permettre un appairage multiple comme divulgué ci-après.

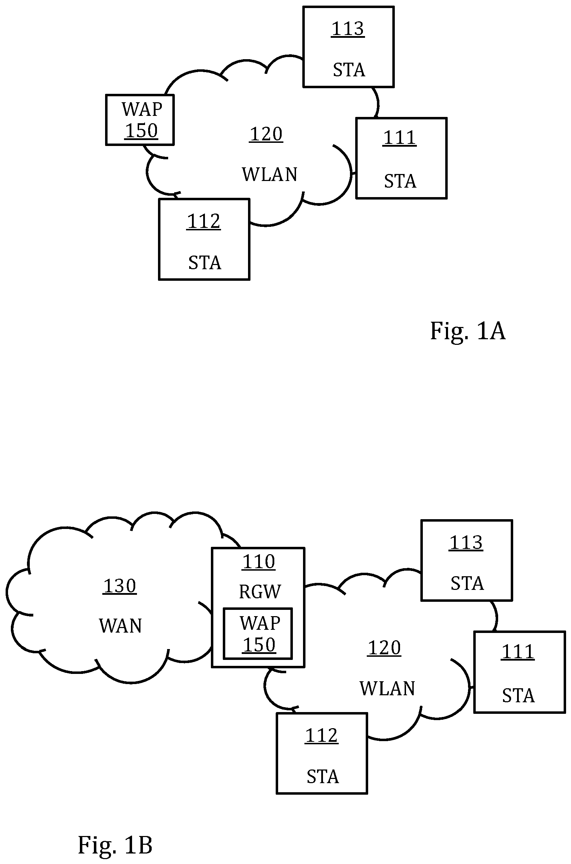

La **Fig. 1A** illustre schématiquement un premier exemple de système de communication. Le système de communication comporte le point d'accès sans-fil WAP 150 et les stations STA 111, 112, 113. Les stations STA 111, 112, 113 sont à portée radio du point d'accès sans-fil WAP 150 et donc dans la couverture radio du réseau local sans-fil WLAN 120. Les stations STA 111, 112, 113 sont donc aptes à recevoir des trames de balise émises par le point d'accès sans-fil WAP 150 pour signaler le réseau local sans-fil WLAN 120. Le point d'accès sans-fil WAP 150 est par exemple un extendeur qui, conjointement avec au moins un autre point d'accès sans-fil WAP 150 auquel ledit point d'accès sans-fil WAP 150 est connecté et communique via un réseau de communication fédérateur (non représenté, « backbone communication network » en anglais, aussi appelé « backhaul link »), permet d'étendre la couverture radio du réseau local sans-fil WLAN 120.

La **Fig. 1B** illustre schématiquement un deuxième exemple de système de communication. Le système de communication comporte le point d'accès sans-fil WAP 150, ainsi que les stations STA 111, 112, 113 dans la couverture radio du réseau local sans-fil WLAN 120. Le point d'accès sans-fil WAP 150 est intégré à une passerelle résidentielle RGW 110. La passerelle résidentielle RGW 110 est apte à fournir des services d'accès à un réseau étendu WAN (« Wide Area Network » en anglais) 130, tel que l'Internet, à des dispositifs tiers. Pour pouvoir bénéficier des services d'accès à un réseau étendu WAN, les stations STA 111, 112, 113 doivent d'abord être connectées à la passerelle résidentielle RGW 110 via le réseau local sans-fil WLAN 120 et donc être appairées avec le point d'accès sans-fil WAP 150.

Le point d'accès sans-fil WAP 150, ainsi que les stations STA 111, 112, 113, sont agencées pour implémenter un appairage multiple. Les stations STA 111, 112, 113 sont alors dans la couverture radio du réseau local sans-fil WLAN 120, mais ne sont pas appairées avec le point d'accès sans-fil WAP 150.

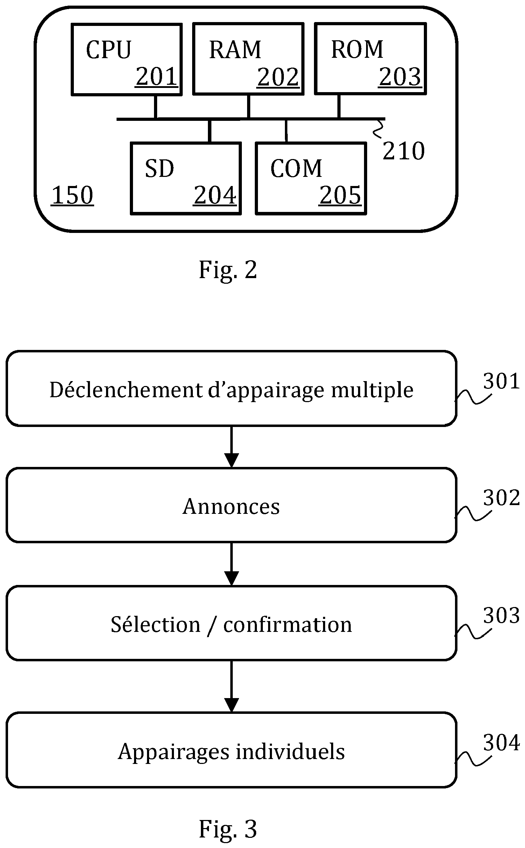

La **Fig. 2** illustre schématiquement un exemple d'architecture matérielle incluse dans le point d'accès sans-fil WAP 150. Chaque station STA 111, 112, 113 peut inclure une architecture matérielle similaire. L'exemple d'architecture matérielle permet d'implémenter les étapes, comportements et algorithmes décrits ici pour réaliser l'appairage multiple.

L'architecture matérielle comporte, reliés par un bus de communication 210 : un processeur ou CPU (pour « Central Processing Unit » en anglais) 201 ; une mémoire vive RAM (pour « Random Access Memory » en anglais) 202 ; une mémoire morte ROM (pour « Read Only Memory » en anglais) 203, ou une mémoire réinscriptible de type EEPROM (« Electrically Erasable Programmable ROM » en anglais), par exemple de type Flash ; un dispositif de stockage de données, tel qu'un disque dur HDD (pour « Hard Disk Drive » en anglais), ou un lecteur de support de stockage, tel qu'un lecteur de cartes SD (pour « Secure Digital » en anglais) 204 ; au moins une interface de communication 205.

L'interface de communication 205 permet au point d'accès sans-fil WAP 150 de mettre notamment en place le réseau local sans-fil WLAN 120 et de communiquer avec toute station à portée radio, telle que les stations STA 111, 112, 113.

L'interface de communication 205 permet aux stations STA 111, 112, 113 de recevoir des trames de balise émises par le point d'accès sans-fil WAP 150 pour signaler le réseau local sans-fil WLAN 120 et de communiquer avec le point d'accès sans-fil WAP 150.

Le processeur 201 est capable d'exécuter des instructions chargées dans la RAM 202 à partir de la ROM 203, d'une mémoire externe (non représentée), d'un support de stockage, tel qu'une carte SD ou le disque dur HDD, ou d'un réseau de communication. Lorsque l'architecture matérielle est mise sous tension, le processeur 201 est capable de lire de la RAM 202 des instructions et de les exécuter. Ces instructions forment un programme d'ordinateur causant l'implémentation, par le processeur 201, des étapes, comportements et algorithmes décrits ici.

Tout ou partie des étapes, comportements et algorithmes décrits ici peut ainsi être implémenté sous forme logicielle par exécution d'un ensemble d'instructions par une machine programmable, telle qu'un DSP (« Digital Signal Processor » en anglais) ou un processeur, ou être implémenté sous forme matérielle par une machine ou un composant (« chip » en anglais) dédié, tel qu'un FPGA (pour « Field-Programmable Gate Array » en anglais) ou un ASIC (pour « Application-Specific Integrated Circuit » en anglais). D'une manière générale, le point d'accès sans-fil WAP 150 et les stations STA 111, 112, 113 comportent de la circuiterie électronique agencée et configurée pour implémenter les étapes, comportements et algorithmes décrits ici.

La **Fig. 3** illustre schématiquement un algorithme général d'appairage multiple.

Dans une étape 301, l'appairage multiple est déclenché. Une session d'appairage multiple est alors ouverte.

Dans un mode de réalisation préféré, le déclenchement de l'appairage multiple intervient sur simple détection d'un appui sur un bouton dédié. Le bouton en question est par exemple un bouton poussoir sur un boîtier du point d'accès sans-fil WAP 150 ou un bouton virtuel d'une interface graphique affichée sur un écran du point d'accès sans-fil WAP 150.

Dans un autre mode de réalisation, le déclenchement de l'appairage multiple intervient sur réception d'une instruction d'une station déjà appairée avec le point d'accès sans-fil WAP 150, lui permettant de bénéficier des services du réseau local sans-fil WLAN 120. Cette station est alors authentifiée auprès du point d'accès sans-fil WAP 150 et exécute une application de configuration à distance du point d'accès sans-fil WAP 150. Un écran de la station en question affiche une interface graphique qui présente un bouton virtuel destiné à engendrer une transmission au point d'accès sans-fil WAP 150 d'une instruction de déclenchement de l'appairage multiple.

Dans encore un autre mode de réalisation, le déclenchement de l'appairage multiple intervient automatiquement au démarrage, ou au redémarrage (« reboot » en anglais) du point d'accès sans-fil WAP 150. Ainsi, l'installation d'un nouveau point d'accès sans-fil, ou le remplacement d'un point d'accès sans-fil obsolète ou défaillant, ou le remplacement d'une passerelle résidentielle obsolète ou défaillante qui intègre un tel point d'accès sans-fil, est facilité.

Dans une étape 302, le point d'accès sans-fil WAP 150 et les stations STA désireuses de participer à l'appairage multiple effectuent des annonces y afférentes. Le point d'accès sans-fil WAP 150 informe ainsi du déclenchement de l'appairage multiple. Et en réponse, les stations STA intéressées informent de leur demande de participation à l'appairage multiple.

Dans un mode de réalisation particulier, les stations STA qui participent à l'appairage multiple sont les stations STA qui sont à portée radio du point d'accès sans-fil WAP 150 et qui ne sont appairées à aucun point d'accès sans-fil WAP (i.e., qui ne sont connectées à aucun réseau local sans-fil WLAN). Les stations STA en question sont alors en recherche d'éventuels réseaux locaux sans-fil WLAN dans leur environnement radio. Les stations STA en question sont en conséquence à l'écoute d'un medium de communication utilisable pour supporter un réseau local sans-fil WLAN. Par exemple, les stations STA en question cherchent à détecter dans une bande de fréquences prédéfinie, et selon un format prédéfini, des trames de balise ou des messages qui seraient transmis par d'éventuels points d'accès sans-fil WAP à portée radio. Ainsi, l'installation simultanée d'un ensemble de stations STA (par exemple un ensemble d'extendeurs à associer à une passerelle résidentielle) est facilitée. De même, un ensemble de stations STA qui ont été déconnectées suite à un remplacement de point d'accès sans-fil (e.g., remplacement de passerelle résidentielle) peuvent ainsi être aisément réappairées.

Pour annoncer le déclenchement de l'appairage multiple, le point d'accès sans-fil WAP 150 inclut, pendant un temps T prédéfini, dans des trames de balise (« beacon frames » en anglais) correspondant au réseau local sans-fil WLAN 120, une notification de déclenchement d'appairage multiple. Préférentiellement, cette notification prend la forme d'une structure de type « élément d'information » IE (« Information Element » en anglais) spécifique notifiant d'un déclenchement d'appairage multiple, tel que défini dans la famille de standards IEEE 802.11. Le temps T prédéfini correspond à une période de déclaration, par exemple de 2 minutes, pendant laquelle les stations STA peuvent formuler une demande de participation à l'appairage multiple. Le point d'accès sans-fil WAP 150 fournit, dans cet élément d'information IE, un identifiant de session d'appairage multiple, qui est par exemple un ensemble de 4 octets déterminé aléatoirement, permettant de référencer la session d'appairage multiple.

De manière illustrative, cet élément d'information IE contient :
- Un identifiant d'élément d'information IE spécifique à l'appairage multiple, sur un octet, par exemple « 221 » ;
- Une information de longueur sur un octet, par exemple « 9 », qui représente la quantité d'octets qui suivent encore dans l'élément d'information IE ;
- Un identifiant d'organisation, fabricant du point d'accès sans-fil WAP 150, sur trois octets, par exemple « 0x4065A3 » ;
- Un champ de contenu, composé par exemple d'un sous-champ de type (par exemple : « 1 ») de taille égale à un octet, suivi d'un sous-champ de sous-type (par exemple : « 1 ») de taille égale à un octet et d'un sous-champ de données de quatre octets contenant l'identifiant de session d'appairage multiple.

En procédant ainsi, les stations STA non-compatibles avec l'appairage multiple détectent que l'identifiant d'élément d'information leur est inconnu et ignorent donc cette partie des trames de balise reçues. La compatibilité avec des stations de réseau local sans-fil WLAN déjà existantes, et plus particulièrement de type Wi-Fi, est ainsi assurée.

Les stations STA compatibles avec l'appairage multiple et qui sont en attente d'être appairées détectent que l'identifiant d'élément d'information correspond à un déclenchement d'appairage multiple. Chaque station STA concernée annonce en retour une demande de participation à l'appairage multiple, en précisant l'identifiant de session d'appairage multiple concerné, récupéré dans l'élément d'information IE spécifique à l'appairage multiple dans les trames de balise. Préférentiellement, un nom d'hôte (« hostname » en anglais) de la station STA en question est fourni en complément. Le point d'accès sans-fil WAP 150 peut ainsi prendre en compte la demande de ladite station STA à participer à l'appairage multiple.

Dans un mode de réalisation particulier, cette réponse prend la forme d'une trame d'action *« Action Frame* » à destination explicite du point d'accès sans-fil WAP 150. « *Action Frame* » est un type de trame de gestion (« management frames » en anglais) de la famille de standards IEEE 802.11 sur laquelle sont basés les réseaux Wi-Fi, qui est utilisé pour demander en mode point-à-point (« unicast » en anglais) à un pair de déclencher une action. Par exemple, cette « *Action Frame »* a le format suivant :
- Un identifiant de catégorie, par exemple « 127 » ;
- Un identifiant d'organisation, fabricant de la station STA en question, sur trois octets, par exemple « 0x4065A3 » ;
- Un champ de contenu, composé par exemple d'un sous-champ de type (par exemple : « 1 ») de taille égale à un octet, suivi d'un sous-champ de sous-type (par exemple : « 2 ») de taille égale à un octet et d'un sous-champ de données contenant l'identifiant de session d'appairage multiple (sur quatre octets), ainsi que le nom d'hôte de la station STA en question (sur quatre octets).

En variante, la réponse prend la forme d'une trame de sondage « *Probe Request »* dans la famille de standards IEEE 802.11, diffusée par la station STA en question. « *Probe Request »* est un type de requête générale d'informations de la famille de standards IEEE 802.11, qui est transmise en mode diffusion (« broadcast » en anglais) pour obtenir des informations concernant une cellule. Dans ce cas, la station STA en question inclut dans la trame un élément d'information IE spécifique. Par exemple, l'élément d'information IE de cette « *Probe Request »* a le format suivant :
- Un identifiant d'élément d'information IE spécifique à l'appairage multiple, par exemple « 221 » ;
- Une information de longueur sur un octet, par exemple « 25 », qui représente la quantité d'octets qui suivent encore dans l'élément d'information IE ;
- Un identifiant d'organisation, fabricant de la station STA en question, par exemple « 0x4065A3 » ;
- Un champ de contenu, composé par exemple d'un sous-champ de type (par exemple : « 1 ») de taille égale à un octet, suivi d'un sous-champ de sous-type (par exemple : « 2 ») de taille égale à un octet et d'un sous-champ de données contenant l'identifiant de session d'appairage multiple (sur quatre octets), ainsi que le nom d'hôte de la station STA en question (sur seize octets).

Lorsque le point d'accès sans-fil WAP 150 reçoit une telle réponse, il vérifie que l'identifiant de session d'appairage multiple indiqué correspond à l'appairage multiple référencé dans ses propres trames de balise.

Si tel n'est pas le cas, cela signifie qu'un autre appairage multiple est annoncé en parallèle. Alors, dans un mode de réalisation particulier, le point d'accès sans-fil WAP 150 met immédiatement fin à la session d'appairage multiple, et peut émettre un signal d'erreur. Dans un mode de réalisation, le signal d'erreur est un clignotement d'une diode électroluminescente de couleur rouge à une fréquence de 4Hz pendant 5 secondes.

Sinon, le point d'accès sans-fil WAP 150 ajoute le nom de la station STA ayant répondu dans une liste L, initialement vide, si elle ne s'y trouve pas déjà. A noter que la réponse en question permet également au point d'accès sans-fil WAP 150 d'obtenir l'adresse MAC (« Medium Access Control » en anglais) de la station STA en question.

L'identifiant de session d'appairage multiple, de même que le nom d'hôte, retourné par la station STA au point d'accès sans-fil WAP 150 contribue ainsi à la sécurisation du processus d'appairage.

Ainsi, à l'issue du temps T prédéfini, le point d'accès sans-fil WAP 150 cesse de signaler le déclenchement de l'appairage multiple dans les trames balise, et la liste L énumère les stations STA à considérer pour l'appairage multiple. Une alternative à l'expiration du temps T prédéfini est une détection d'un appui sur un bouton dédié. Le bouton en question est par exemple un bouton poussoir sur le boîtier du point d'accès sans-fil WAP 150 ou un bouton virtuel de l'interface graphique affichée sur un écran du point d'accès sans-fil WAP 150, qui permet de requérir une fin anticipée de la période de déclaration. En variante, une alternative à l'expiration du temps T prédéfini est une réception d'instruction de la station, déjà appairée avec le point d'accès sans-fil WAP 150, qui a déclenché l'appairage multiple grâce à son application de configuration à distance du point d'accès sans-fil WAP 150. Un écran de la station en question affiche une interface graphique qui présente un bouton virtuel destiné à interdire toute nouvelle entrée dans la liste L. Un appui sur ce bouton engendre une transmission au point d'accès sans-fil WAP 150 d'une instruction d'arrêt anticipé de la période de déclaration, c'est-à-dire d'arrêt de signalisation de l'appairage multiple dans les trames de balise et d'interdire toute nouvelle entrée dans la liste L.

Dans une étape 303 optionnelle, une étape de sélection et de confirmation est effectuée parmi les stations STA énumérées dans la liste L.

Dans un mode de réalisation, un écran de du point d'accès sans-fil WAP 150 affiche une interface graphique dans laquelle est présenté l'ensemble des stations STA énumérées dans la liste L, en utilisant préférentiellement leurs noms d'hôte (« hostnames » en anglais).

Dans un autre mode de réalisation, l'affichage est effectué sur une station déjà appairée avec le point d'accès sans-fil WAP 150 et qui a déclenché l'appairage multiple grâce à l'application susmentionnée. Un écran de la station en question affiche une interface graphique dans laquelle est présenté l'ensemble des stations STA énumérées dans la liste L, qui a été fournie par le point d'accès sans-fil WAP 150 en réponse à l'instruction de déclenchement de l'appairage multiple.

Le point d'accès sans-fil WAP 150 peut fournir l'énumération des stations STA à l'expiration de la période de déclaration. Le point d'accès sans-fil WAP 150 peut aussi en fournir l'énumération au fur et à mesure que les stations STA formulent leurs demandes de participation à l'appairage multiple. Cela permet notamment à l'utilisateur d'être sûr des stations qui se sont déjà déclarées pour l'appairage multiple, s'il souhaite anticiper la fin de la période de déclaration par un appui bouton.

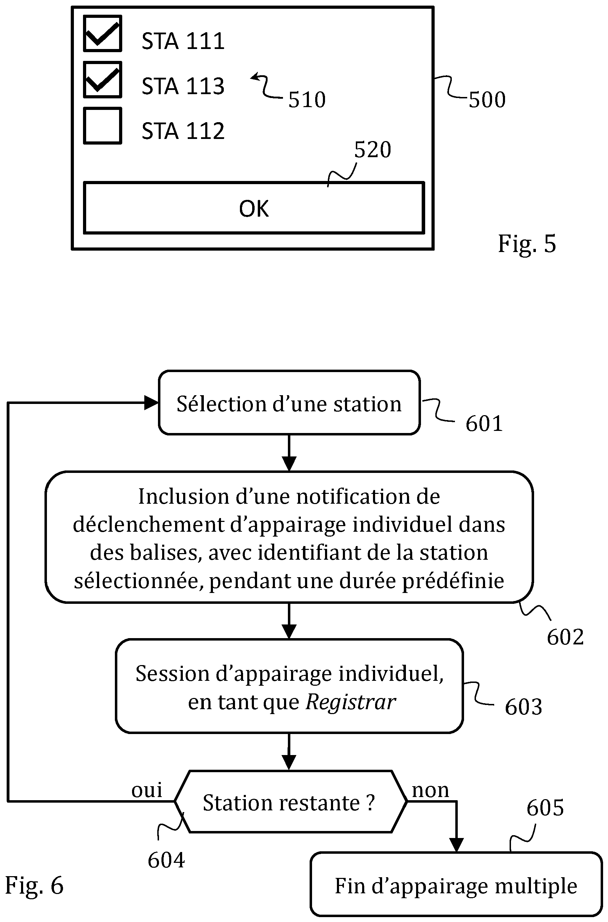

La **Fig. 5** illustre schématiquement un exemple d'affichage 500 d'une telle interface graphique. Des icônes permettent de confirmer (cases cochées sur la Fig. 5) ou d'infirmer (case décochée sur la Fig. 5) la prise en compte de telle ou telle station STA dans l'appairage multiple. La liste L est mise à jour en fonction d'un choix utilisateur confirmé via l'interface graphique (bouton virtuel OK 520 sur la Fig. 5), que la station STA en question transmet ensuite au point d'accès sans-fil WAP 150.

De retour à la Fig. 3, dans une étape 304, des procédures d'appairage individuel sont successivement opérées entre le point d'accès sans-fil WAP 150 et les stations STA énumérées dans la liste L. Il convient de noter que l'étape 303 est optionnelle, ce qui signifie que, dans certains modes de réalisation, la liste L utilisée pour les procédures d'appairage individuel est celle issue de l'étape 302.

Pendant les procédures d'appairage individuel, chaque station STA est considérée sans tenir compte des autres stations STA de la liste L. Dans chaque procédure d'appairage individuel, le point d'accès sans-fil WAP 150 et une unique station STA effectuent des échanges de messages afin de réaliser une authentification mutuelle pour valider l'appairage. Les échanges de messages de chaque procédure d'appairage individuel se déroulent exactement comme dans le cas d'un appairage unique. L'appairage multiple est ainsi simple à implémenter, et les points d'accès WAP et stations STA déjà existants peuvent être améliorés grâce à des mises à jour simples.

Pour effectuer les appairages individuels, le point d'accès sans-fil WAP 150 parcourt la liste L et pour chaque station STA, le point d'accès sans-fil WAP 150 signale à la station STA en question quand c'est son tour.

Dans un mode de réalisation particulier, le déclenchement de l'appairage individuel pour une station STA prend la forme un élément d'information IE spécifique notifiant du déclenchement de l'appairage individuel. L'élément d'information IE inclut l'adresse MAC de la station STA en question. L'élément d'information IE est inclus dans les trames de balise transmises par le point d'accès sans-fil WAP 150 pendant un temps T' (par exemple, 30 secondes).

De manière illustrative, cet élément d'information IE contient :
- Un identifiant d'élément d'information IE spécifique à l'appairage multiple, sur un octet, par exemple « 221 » ;
- Une information de longueur sur un octet, par exemple « 11 », qui représente la quantité d'octets qui suivent encore dans l'élément d'information IE ;
- Un identifiant d'organisation, fabricant du point d'accès sans-fil WAP 150, sur trois octets, par exemple « 0x4065A3 » ;
- Un champ de contenu, composé par exemple d'un sous-champ de type (par exemple : « 1 ») de taille égale à un octet, suivi d'un sous-champ de sous-type (par exemple : « 3 ») de taille égale à un octet et d'un sous-champ de données de six octets contenant l'adresse MAC de la station STA concernée.

En variante, cette réponse prend la forme d'une trame d'action « *Action Frame »* à destination explicite de la station STA en question (i.e., grâce à son adresse MAC). Par exemple, cette « *Action Frame »* a le format suivant :
- Un identifiant de catégorie, par exemple « 127 » ;
- Un identifiant d'organisation, fabricant de la station STA en question, sur trois octets, par exemple « 0x4065A3 » ;
- Un champ de contenu, composé par exemple d'un sous-champ de type (par exemple : « 1 ») de taille égale à un octet, suivi d'un sous-champ de sous-type (par exemple : « 3 ») de taille égale à un octet.

Une session d'appairage individuel prend alors place entre le point d'accès sans-fil WAP 150 et la station STA en question. Dans la technologie WPS, le point d'accès sans-fil WAP 150 joue le rôle de « *Registrar* » et la station STA en question joue le rôle de « *Enrolee ».*

À l'issue de la session d'appairage individuel, et quel qu'en soit le résultat (réussite ou échec), le point d'accès sans-fil WAP 150 recommence la même procédure d'appairage individuel avec la station STA suivante dans la liste L, jusqu'à avoir ainsi traité l'ensemble des stations STA énumérées dans la liste L. Il est alors mis fin à l'appairage multiple.

L'approche d'appairage multiple permet de procéder à plusieurs appairages de stations avec un point d'accès sans-fil WAP lors d'une même session d'appairage. De plus, l'approche d'appairage multiple proposée centralise les actions utilisateur sur le point d'accès sans-fil WAP ou sur une application d'un terminal déjà appairé avec le point d'accès sans-fil WAP, ce qui est plus simple que les approches WPS connues jusqu'alors : il n'y a ici pas besoin de manipuler à la fois le point d'accès sans-fil WAP et chaque station STA pour réaliser les appairages.

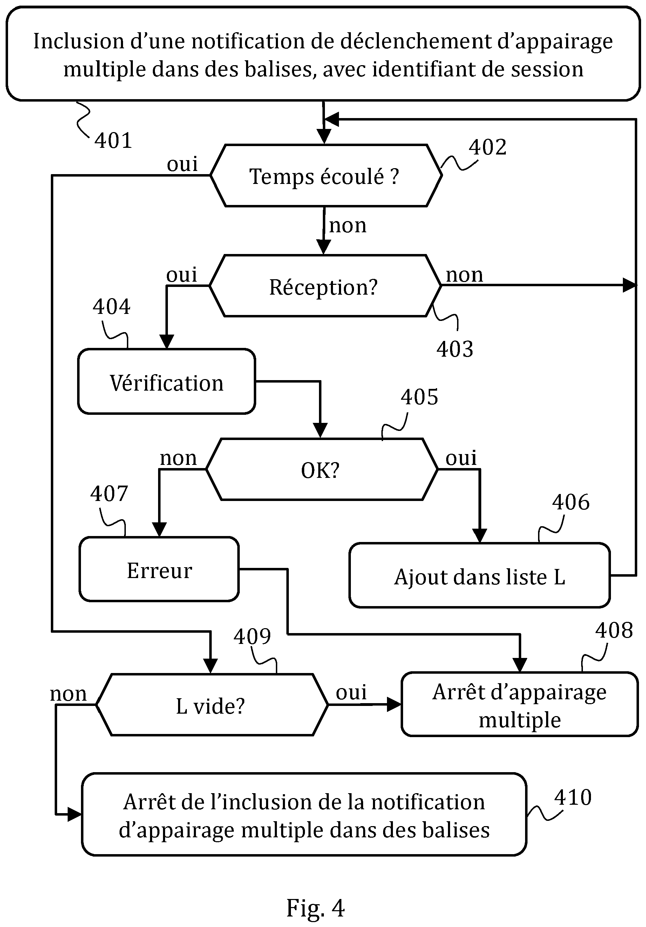

La **Fig. 4** illustre schématiquement un algorithme d'initiation d'appairage multiple, dans un mode de réalisation particulier. L'algorithme de la Fig. 4 est implémenté par le point d'accès sans-fil WAP 150 lorsqu'un appairage multiple a été déclenché.

Dans une étape 401, le point d'accès sans-fil WAP 150 inclut une notification de déclenchement d'appairage multiple dans des trames de balise diffusées par le point d'accès sans-fil WAP 150 dans le cadre du réseau local sans-fil WLAN 120. Le point d'accès sans-fil WAP 150 procède ainsi pendant le temps T susmentionné.

Dans une étape 402, le point d'accès sans-fil WAP 150 vérifie si le temps T susmentionné est écoulé (i.e., la période de déclaration est terminée). Si tel est le cas, une étape 409 est effectuée ; sinon, une étape 403 est effectuée.

Dans l'étape 403, le point d'accès sans-fil WAP 150 vérifie si une demande de participation à l'appairage multiple a été reçue. Si tel est le cas, une étape 404 est effectuée ; sinon, l'étape 402 est répétée.

Dans l'étape 404, le point d'accès sans-fil WAP 150 effectue une vérification de la réponse reçue. Le point d'accès sans-fil WAP 150 vérifie notamment que la demande de participation à l'appairage multiple inclut bien un identifiant de session d'appairage multiple qui est fourni dans la notification de déclenchement d'appairage multiple ajoutée aux trames de balise diffusées.

Dans une étape 405, le point d'accès sans-fil WAP 150 vérifie si une erreur est survenue dans la vérification de l'étape 404, par exemple si un autre appairage multiple est aussi annoncé en parallèle et que la réponse reçue concerne finalement cet autre appairage multiple. Si tel est le cas, une étape 407 est effectuée ; sinon, une étape 406 est effectuée.

Dans l'étape 406, le point d'accès sans-fil WAP 150 ajoute dans une liste L un identifiant, tel que son adresse MAC et/ou son nom d'hôte (« hostname » en anglais), de la station STA ayant transmis la réponse reçue. Puis, l'étape 402 est répétée.

Dans l'étape 407, le point d'accès sans-fil WAP 150 notifie l'erreur (e.g. allumage d'une diode électroluminescente) et met fin à l'appairage multiple dans une étape 408, ce qui met aussi fin à l'algorithme de la Fig. 4.

Dans l'étape 409, le point d'accès sans-fil WAP 150 vérifie si, à l'issue de la période de déclaration, la liste L est vide. Si tel est le cas, aucun appairage n'est à effectuer et le point d'accès sans-fil WAP 150 met fin à l'appairage multiple dans l'étape 408 ; sinon, une étape 410 est effectuée.

Dans l'étape 410, le point d'accès sans-fil WAP 150 arrête l'inclusion, dans les trames de balise diffusées, de la notification de déclenchement d'appairage multiple. Et il est mis fin à l'algorithme de la Fig. 4. Toute demande de participation à l'appairage multiple qui serait reçue ultérieurement (pour cette même session d'appairage multiple) est ignorée.

La Fig. 6 illustre schématiquement un algorithme d'exécutions successives de procédures d'appairages individuels dans une même session d'appairage. L'algorithme de la Fig. 6 est implémenté par le point d'accès sans-fil WAP 150 lorsque la liste L n'est pas vide.

Dans une étape 601, le point d'accès sans-fil WAP 150 sélectionne une station STA énumérée dans la liste L. le point d'accès sans-fil WAP 150 va chercher à démarrer une session d'appairage individuel avec la station STA sélectionnée.

Dans une étape 602, le point d'accès sans-fil WAP 150 inclut une notification de déclenchement d'appairage individuel dans des trames de balise diffusées par le point d'accès sans-fil WAP 150 dans le cadre du réseau local sans-fil WLAN 120. La notification inclut l'adresse MAC de la station sélectionnée. Le point d'accès sans-fil WAP 150 procède ainsi au plus pendant le temps T' susmentionné.

Si à l'expiration du temps T' susmentionné, la station STA sélectionnée n'a pas participé à la session d'appairage individuel, le point d'accès sans-fil WAP 150 stoppe l'inclusion de la notification de déclenchement d'appairage individuel dans les trames de balise et passe directement à une étape 604.

Dans une étape 603, le point d'accès sans-fil WAP 150 prend le rôle de « *Registrar* », et effectue la session d'appairage individuel avec la station STA sélectionnée. La station STA sélectionnée, qui a détecté son adresse MAC dans les trames de balise diffusées par le point d'accès sans-fil WAP 150, est supposée prendre le rôle de « *Enrolee* ». Une procédure classique d'appairage individuel peut alors être automatiquement mise en place.

Dans l'étape 604, quel que soit le résultat de la session d'appairage individuel, le point d'accès sans-fil WAP 150 stoppe l'inclusion de la notification de déclenchement d'appairage individuel dans les trames de balise et vérifie s'il reste au moins une station STA à traiter dans la liste L. Si tel est le cas, l'étape 401 est répétée en sélectionnant une autre station STA dans la liste L ; sinon, une étape 605 est effectuée, dans laquelle le point d'accès sans-fil WAP 150 met fin à l'appairage multiple.

Dans un mode de réalisation particulier, lorsqu'une station STA détecte plus d'une session d'appairage multiple dans un intervalle de temps prédéfini (par exemple 2 minutes), la station STA ignore toute proposition d'appairage multiple et ignore également toute proposition d'appairage individuel pendant une durée prédéfinie (par exemple 5 minutes). Cela évite des appairages avec un point d'accès sans-fil WAP erroné.

On peut noter que la procédure d'appairage divulguée ici fonctionne aussi dans le cas où une seule station répond pendant la période de déclaration. Il ne s'agit pas littéralement dans ce cas d'un appairage « multiple » mais d'un appairage individuel qui a suivi la procédure d'un appairage multiple.

## Revendications

1. Procédé d'appairage multiple pour appairer plusieurs stations (111, 112, 113) avec un point d'accès sans-fil (150) d'un réseau local sans-fil (120), le point d'accès sans-fil (150) diffusant des trames de balise relatives au réseau local sans-fil (120), le procédé comportant :
- inclure (401), par le point d'accès, dans les trames de balise diffusées, une notification de déclenchement d'appairage multiple incluant un identifiant de session d'appairage multiple, pendant une période de déclaration de durée maximum prédéfinie ;
- recevoir (403), par le point d'accès, des demandes de participation à l'appairage multiple en provenance desdites stations (111, 112, 113), lesdites demandes incluant l'identifiant de session d'appairage multiple, et créer, par le point d'accès, à partir des demandes reçues une liste de stations à appairer ; et
- à l'expiration de la période de déclaration, effectuer (304, 603), par le point d'accès, des appairages individuels à tour de rôle avec chacune des stations (111, 112, 113) de la liste.

2. Procédé selon la revendication 1, comportant :
- fournir, par le point d'accès, pour affichage sur une interface graphique (500) la liste des stations (510) desquelles lesdites demandes ont été reçues ;
- recevoir, par le point d'accès, une confirmation de la liste des stations à appairer, ou une sélection de stations à appairer parmi la liste fournie ; et
- effectuer (304, 603), par le point d'accès, les appairages individuels à tour de rôle, et pour seulement les stations sélectionnées (111, 113) le cas échéant.

3. Procédé selon la revendication 2, dans lequel lesdites demandes incluent chacune un nom d'hôte de la station (111, 112, 113) ayant transmis la demande en question, et dans lequel la liste (510) des stations qui est fournie pour affichage, par le point d'accès, sur l'interface graphique (500) est une liste desdits noms d'hôtes.

4. Procédé selon l'une des revendications 2 et 3, dans lequel la liste (510) des stations pour affichage sur l'interface graphique est fournie par le point d'accès au fur et à mesure des réceptions des demandes de participation à l'appairage multiple, et comportant :
- recevoir, par le point d'accès, la confirmation de la liste des stations à appairer, ou la sélection de stations à appairer parmi la liste fournie, avant que la durée maximum prédéfinie de la période de déclaration ne soit expirée, et mettre fin, par le point d'accès, à la période de déclaration de manière anticipée.

5. Procédé selon l'une quelconque des revendications 2 à 4, dans lequel l'interface graphique (500) est fournie par une station préalablement appairée avec le point d'accès sans-fil (150).

6. Procédé selon l'une quelconque des revendications 1 à 5, dans lequel les trames de balise ont un format défini par la famille de standards IEEE 802.11, et la notification de déclenchement d'appairage multiple a la forme d'une structure de type « Information Element » IE dédiée.

7. Procédé selon l'une quelconque des revendications 1 à 6, comportant :
- initier, par le point d'accès, chaque appairage individuel en incluant dans les trames de balise, pour chaque station (111, 112, 113) à appairer à son tour, une notification de déclenchement d'appairage individuel incluant l'adresse MAC de la station en question, l'adresse MAC ayant été obtenue, par le point d'accès, grâce à la réception de la demande de participation à l'appairage multiple en provenance de la station (111, 112, 113) en question.

8. Procédé selon la revendication 7, dans lequel les trames de balise ont un format défini par la famille de standards IEEE 802.11, et la notification de déclenchement d'appairage individuel a la forme d'une structure de type « Information Element » IE dédiée.

9. Procédé selon l'une quelconque des revendications 1 à 6, dans lequel le point d'accès sans-fil (150) et les stations (111, 112, 113) échangent des messages selon un format défini par la famille de standards IEEE 802.11, et comportant :
- initier, par le point d'accès, chaque appairage individuel en envoyant à chaque station (111, 113) à appairer, à son tour, une trame de type « Action Frame » dédiée.

10. Procédé selon l'une quelconque des revendications 1 à 9, dans lequel le point d'accès sans-fil (150) et les stations (111, 112, 113) échangent des messages selon un format défini par la famille de standards IEEE 802.11, et dans lequel les demandes de participation à l'appairage multiple ont la forme de trames diffusées de type « Probe Request » incluant une structure de type « Information Element » IE dédiée.

11. Procédé selon l'une quelconque des revendications 1 à 9, dans lequel le point d'accès sans-fil (150) et les stations (111, 112, 113) échangent des messages selon un format défini par la famille de standards IEEE 802.11, et dans lequel les demandes de participation à l'appairage multiple ont la forme de trames de type « Action Frame » dédiées.

12. Procédé selon l'une quelconque des revendications 1 à 11, comportant, avant l'expiration de la période de déclaration :
- sur réception, par le point d'accès, d'une demande de participation à un autre appairage multiple identifié par un autre identifiant de session d'appairage multiple, mettre fin, par le point d'accès, à l'appairage multiple.

13. Procédé selon l'une quelconque des revendications 1 à 12, dans lequel les stations qui envoient les demandes de participation à l'appairage multiple sont des stations (111, 112, 113) qui ne sont appairées à aucun point d'accès sans-fil (150) au moment de recevoir la notification de déclenchement d'appairage multiple.

14. Procédé selon l'une quelconque des revendications 1 à 13, dans lequel lorsqu'une station détecte plus d'une session d'appairage multiple dans un intervalle de temps prédéfini, la station en question ignore toute proposition d'appairage multiple et ignore également toute proposition d'appairage individuel pendant une durée prédéfinie.

15. Produit programme d'ordinateur comportant des instructions pour implémenter le procédé selon l'une quelconque des revendications 1 à 4 et 6 à 12, lorsque lesdites instructions sont exécutées par un processeur.

16. Support de stockage d'informations stockant un programme d'ordinateur comportant des instructions pour implémenter le procédé selon l'une quelconque des revendications 1 à 4 et 6 à 12, lorsque lesdites instructions sont lues depuis le support de stockage d'informations et exécutées par un processeur.

17. Point d'accès sans-fil (150) configuré pour effectuer un appairage multiple permettant d'appairer plusieurs stations (111, 112, 113) avec un point d'accès sans-fil (150) d'un réseau local sans-fil (120), le point d'accès sans-fil (150) comportant des moyens pour diffuser des trames de balise relatives au réseau local sans-fil (120), le point d'accès sans-fil (150) comportant de la circuiterie électronique configurée pour :
- inclure (401), dans les trames de balise diffusées, une notification de déclenchement d'appairage multiple incluant un identifiant de session d'appairage multiple, pendant une période de déclaration de durée maximum prédéfinie ;
- recevoir (403) des demandes de participation à l'appairage multiple en provenance desdites stations (111, 112, 113), lesdites demandes incluant l'identifiant de session d'appairage multiple, et créer à partir des demandes reçues une liste de stations à appairer ; et
- à l'expiration de la période de déclaration, effectuer (304, 603) des appairages individuels à tour de rôle avec chacune des stations (111, 112, 113) de la liste.

## Patentansprüche

1. Verfahren zum Mehrfach-Pairing zum Paaren mehrerer Stationen (111, 112, 113) mit einem drahtlosen Zugangspunkt (150) eines drahtlosen lokalen Netzwerks (120), wobei der drahtlose Zugangspunkt (150) Beacon-Rahmen des drahtlosen lokalen Netzwerks (120) ausstrahlt, wobei das Verfahren umfasst:
- Einbinden (401) einer Meldung zur Auslösung eines Mehrfach-Pairing, die eine Kennung der Mehrfach-Pairing-Sitzung enthält, durch den Zugangspunkt in die ausgestrahlten Beacon-Rahmen während eines Anmeldungszeitraums einer vorgegebenen Höchstdauer;
- Empfangen (403) von Anfragen zur Teilnahme am Mehrfach-Pairing von den Stationen (111, 112, 113) durch den Zugangspunkt, wobei die Anfragen die Kennung der Mehrfach-Pairing-Sitzung enthalten, durch den Zugangspunkt und Erstellen einer Liste zu paarender Stationen durch den Zugangspunkt auf Grundlage der empfangenen Anfragen; und
- bei Ablauf des Anmeldungszeitraums Durchführen (304, 603) der Einzel-Pairings mit jeder der Stationen (111, 112, 113) der Liste nacheinander durch den Zugangspunkt.

2. Verfahren nach Anspruch 1, das umfasst:
- Bereitstellen der Liste der Stationen (510), von denen die Anfragen empfangen wurden, durch den Zugangspunkt zur Anzeige auf einer grafischen Oberfläche (500);
- Empfangen einer Bestätigung der Liste zu paarender Stationen oder einer Auswahl zu paarender Stationen aus der bereitgestellten Liste durch den Zugangspunkt; und
- Durchführen (304, 603) der Einzel-Pairings nacheinander durch den Zugangspunkt und gegebenenfalls nur für die ausgewählten Stationen (111, 113).

3. Verfahren nach Anspruch 2, wobei die Anfragen jeweils einen Host-Namen der Station (111, 112, 113) enthalten, die die betreffende Anfrage gesendet hat, und wobei die Liste (510) der Stationen, die durch den Zugangspunkt zur Anzeige auf der grafischen Oberfläche (500) bereitgestellt wird, eine Liste der Host-Namen ist.

4. Verfahren nach einem der Ansprüche 2 und 3, wobei die Liste (510) der Stationen zur Anzeige auf der grafischen Oberfläche durch den Zugangspunkt entsprechend den Empfängen von Anfragen zur Teilnahme am Mehrfach-Pairing bereitgestellt wird, und umfasst:
- Empfangen der Bestätigung der Liste der zu paarenden Stationen oder der Auswahl zu paarender Stationen aus der bereitgestellten Liste durch den Zugangspunkt, bevor die vorgegebene Höchstdauer des Anmeldungszeitraums abgelaufen ist, und vorzeitiges Beenden des Anmeldungszeitraums durch den Zugangspunkt.

5. Verfahren nach einem der Ansprüche 2 bis 4, wobei die grafische Oberfläche (500) durch eine zuvor mit dem drahtlosen Zugangspunkt (150) gepaarte Station bereitgestellt wird.

6. Verfahren nach einem der Ansprüche 1 bis 5, wobei die Beacon-Rahmen ein Format aufweisen, das durch die Normenfamilie IEEE 802.11 definiert ist, und die Meldung zur Auslösung eines Mehrfach-Pairings die Form einer dedizierten Struktur vom Typ "Information Element" IE aufweist.

7. Verfahren nach einem der Ansprüche 1 bis 6, das umfasst:
- Initiieren jedes Einzel-Pairings durch den Zugangspunkt durch Einbinden einer Meldung zur Auslösung eines Einzel-Pairings, die die MAC-Adresse der betreffenden Station enthält, in die Beacon-Rahmen, für jede zu paarende Station (111, 112, 113) seinerseits, wobei die MAC-Adresse wegen des Empfangs der Anfrage zur Teilnahme am Mehrfach-Pairing von der betreffenden Station (111, 112, 113) durch den Zugangspunkt erhalten wurde.

8. Verfahren nach Anspruch 7, wobei die Beacon-Rahmen ein Format aufweisen, das durch die Normenfamilie IEEE 802.11 definiert ist, und die Meldung zur Auslösung eines Einzel-Pairings die Form einer dedizierten Struktur vom Typ "Information Element" IE aufweist.

9. Verfahren nach einem der Ansprüche 1 bis 6, wobei der drahtlose Zugangspunkt (150) und die Stationen (111, 112, 113) Meldungen in einem Format austauschen, das durch die Normenfamilie IEEE 802.11 definiert ist, und umfasst:
- Initiieren jedes Einzel-Pairings durch den Zugangspunkt durch Senden eines dedizierten Rahmens vom Typ "Action Frame" an jede zu paarende Station (111, 113).

10. Verfahren nach einem der Ansprüche 1 bis 9, wobei der drahtlose Zugangspunkt (150) und die Stationen (111, 112, 113) Meldungen in einem Format austauschen, das durch die Normenfamilie IEEE 802.11 definiert ist, und wobei die Anfragen zur Teilnahme am Mehrfach-Pairing die Form ausgestrahlter Rahmen vom Typ "Probe Request" aufweisen, die eine dedizierte Struktur vom Typ "Information Element" IE enthalten.

11. Verfahren nach einem der Ansprüche 1 bis 9, wobei der drahtlose Zugangspunkt (150) und die Stationen (111, 112, 113) Meldungen in einem Format austauschen, das durch die Normenfamilie IEEE 802.11 definiert ist, und wobei die Anfragen zur Teilnahme am Mehrfach-Pairing die Form von dedizierten Rahmen vom Typ "Action Frame" aufweisen.

12. Verfahren nach einem der Ansprüche 1 bis 11, das vor Ablauf des Anmeldungszeitraums umfasst:
- bei Empfang einer Anfrage zur Teilnahme an einem anderen Mehrfach-Pairing, die durch eine andere Kennung bezeichnet ist, durch den Zugangspunkt Beenden des Mehrfach-Pairings durch den Zugangspunkt.

13. Verfahren nach einem der Ansprüche 1 bis 12, wobei die Stationen, die die Anfragen zur Teilnahme am Mehrfach-Pairing senden, Stationen (111, 112, 113) sind, die zum Zeitpunkt des Empfangens der Meldung zur Auslösung eines Mehrfach-Pairings mit keinem drahtlosen Zugangspunkt (150) gepaart sind.

14. Verfahren nach einem der Ansprüche 1 bis 13, wobei, wenn eine Station mehr als eine Mehrfach-Pairing-Sitzung in einem vorgegebenen Zeitintervall erkennt, die betreffende Station während einer vorgegebenen Dauer jeden Vorschlag für ein Mehrfach-Pairing ignoriert und auch jeden Vorschlag für ein Einzel-Pairing ignoriert.

15. Computerprogrammprodukt, das Anweisungen zum Implementieren des Verfahrens nach einem der Ansprüche 1 bis 4 und 6 bis 12 umfasst, wenn die Anweisungen durch einen Prozessor ausgeführt werden.

16. Informationsspeichermedium, das ein Computerprogramm speichert, das Anweisungen zum Implementieren des Verfahrens nach einem der Ansprüche 1 bis 4 und 6 bis 12 umfasst, wenn die Anweisungen aus dem Informationsspeichermedium gelesen und durch einen Prozessor ausgeführt werden.

17. Drahtloser Zugangspunkt (150), der dazu konfiguriert ist, ein Mehrfach-Pairing durchzuführen, das ermöglicht, mehrere Stationen (111, 112, 113) mit einem drahtlosen Zugangspunkt (150) eines drahtlosen lokalen Netzwerks (120) zu paaren, wobei der drahtlose Zugangspunkt (150) Mittel zum Ausstrahlen von Beacon-Rahmen des drahtlosen lokalen Netzwerks (120) umfasst, wobei der drahtlose Zugangspunkt (150) eine elektronische Schaltungsanordnung umfasst, die konfiguriert ist zum:
- Einbinden (401) einer Meldung zur Auslösung eines Mehrfach-Pairing, die eine Kennung der Mehrfach-Pairing-Sitzung enthält, in die ausgestrahlten Beacon-Rahmen während eines Anmeldungszeitraums einer vorgegebenen Höchstdauer;
- Empfangen (403) von Anfragen zur Teilnahme am Mehrfach-Pairing von den Stationen (111, 112, 113), wobei die Anfragen die Kennung der Mehrfach-Pairing-Sitzung enthalten, und Erstellen einer Liste zu paarender Stationen durch den Zugangspunkt auf Grundlage der empfangenen Anfragen; und
- bei Ablauf des Anmeldungszeitraums Durchführen (304, 603) der Einzel-Pairings mit jeder der Stationen (111, 112, 113) der Liste nacheinander.

## Claims

1. Multiple-pairing method for pairing a plurality of stations (111, 112, 113) with a wireless access point (150) of a wireless local area network (120), the wireless access point (150) broadcasting beacon frames relating to the wireless local area network (120), the method comprising:
- including (401), by the access point, in the broadcast beacon frames, a notification of triggering of multiple pairing including a multiple-pairing session identifier, during a declaration period of predefined maximum duration;
- receiving (403), by the access point, requests for participation in the multiple pairing coming from said stations (111, 112, 113) , said requests including the multiple-pairing session identifier, and creating, from the requests received, a list of stations to be paired; and
- when the declaration period expires, making (304, 603) by the access point, individual pairings in turn with each of the stations (111, 112, 113) in the list.

2. Method according to claim 1, comprising:
- providing, by the access point, for display on a graphical interface (500), the list of stations (510) from which said requests were received;
- receiving, by the access point, a confirmation of the list of stations to be paired, or a selection of stations to be paired from the list provided; and
- making (304, 603), by the access point, the individual pairings in turn, and for only the selected stations (111, 113) where applicable..

3. Method according to claim 2, wherein said requests each include a hostname of the station (111, 112, 113) that transmitted the request in question, and wherein the list (510) of the stations that is provided for display, by the access point, on the graphical interface (500) is a list of said hostnames.

4. Method according to one of claims 2 and 3, wherein the list (510) of the stations for display on the graphical interface is provided to the access point as the requests for participation in the multiple pairing are received, and comprising:
- receiving the confirmation of the list of the stations to be paired, or the selection of stations to be paired from the list provided, before the predefined maximum duration of the declaration period has expired, and ending the declaration period early.

5. Method according to any one of claims 1 to 4, wherein the graphical interface (500) is provided to the access point by a station previously paired with the wireless access point (150).

6. Method according to any one of 1 to 5, wherein the beacon frames have a format defined by the IEEE 802.11 family of standards, and the notification of triggering of the multiple pairing is in the form of a structure of the dedicated information element IE type.

7. Method according to any one of claims 1 to 6, comprising:
- Initiating, by the access point, each individual pairing by including, in the beacon frames, for each station (111, 112, 113) to be paired in its turn, a notification of triggering of individual pairing including the MAC address of the station in question, the MAC address having been obtained by receiving the request for participation in the multiple pairing coming from the station (111, 112, 113) in question.

8. Method according to claim 7, wherein the beacon frames have a format defined by the IEEE 802.11 family of standards, and the notification of triggering of individual pairing is in the form of a structure of the dedicated information element IE type.

9. Method according to any one of claims 1 to 6, wherein the wireless access point (150) and the stations (111, 112, 113) exchange messages in a format defined by the IEEE 802.11 family of standards, and comprising:
- initiating, by the access point, each individual pairing by sending, to each station (111, 112, 113) to be paired, in its turn, a frame of the dedicated action frame type.

10. Method according to any one of claims 1 to 9, wherein the wireless access point (150) and the stations (111, 112, 113) exchange messages in a format defined by the IEEE 802.11 family of standards, and wherein the requests for participation in the multiple pairing are in the form of broadcast frames of the probe request type including a structure of the dedicated information element IE type.

11. Method according to any one of claims 1 to 9, wherein, the wireless access point (150) and the stations (111, 112, 113) exchange messages in a format defined by the IEEE 802.11 family of standards, and wherein the requests for participation in the multiple pairing is in the form of dedicated frames of the "action frame" type.

12. Method according to any one of claims 1 to 11, comprising, before the declaration period expires:
- on reception of a request for participation in another multiple pairing identified by another multiple-pairing session identifier, ending, by the access point, the multiple pairing.

13. Method according to any one of claims 1 to 12, wherein the stations that send the requests for participation in the multiple pairing are stations (111, 112, 113) that are not paired with any wireless access point (150) at the time of receiving the multiple-pairing triggering notification.

14. Method according to any one of claims 1 to 13, wherein, when a station detects more than one multiple pairing session in a predefined interval of time, the station in question ignores any proposal for multiple pairing and also ignores any proposal for individual pairing during a predefined period.

15. Computer program product comprising instructions for implementing the method according to any one of claims 1 to 12, when said instructions are executed by a processor.

16. Information storage medium storing a computer program comprising instructions for implementing the method according to any one of claims 1 to 12, when said instructions are read from the information storage medium and executed by a processor.

17. Wireless access point (150) configured for making a multiple pairing, making it possible to pair a plurality of stations (111, 112, 113) with a wireless access point (150) of a wireless local area network (120), the wireless access point (150) comprising means for broadcasting beacon frames relating to the wireless local area network (120), the wireless access point (150) comprising electronic circuitry configured for:
- including (401), in the broadcast beacon frames, a notification of triggering of multiple pairing including a multiple-pairing session identifier, during a declaration period of predefined maximum duration;
- receiving (403) requests for participation in the multiple pairing coming from said stations (111, 112, 113), said requests including the multiple-pairing session identifier, and creating, from the requests received, a list of stations to be paired; and
- when the declaration period expires, making (304, 603) individual pairings in turn with each of the stations (111, 112, 113) in the list.
